# EUROPEAN PATENT SPECIFICATION

(11) **EP 4 145 062 B1**
(45) Date of publication and mention of the grant of the patent: **22.04.2026**
(21) Application number: 21195172.8
(22) Date of filing: 07.09.2021
(51) Int. Cl.: F25B 31/02, D06F 58/20, H02K 9/22, F28D 15/02, F04C 18/00, F25B 30/02

(54) **HEAT PUMP SYSTEM WITH IMPROVED COMPRESSOR COOLING AND PROCESS FOR OPERATING THE HEAT PUMP SYSTEM**
WÄRMEPUMPENSYSTEM MIT VERBESSERTER VERDICHTERKÜHLUNG UND VERFAHREN ZUM BETRIEB DES WÄRMEPUMPENSYSTEMS
SYSTÈME DE POMPE À CHALEUR À REFROIDISSEMENT AMÉLIORÉ DU COMPRESSEUR ET PROCÉDÉ DE FONCTIONNEMENT DU SYSTÈME DE POMPE À CHALEUR

(43) Date of publication of application: 08.03.2023
(73) Proprietor: BSH Hausgeräte GmbH, 81739 München (DE)
(72) Inventor: Baryla, Marcin, Zgierz (PL)

(56) References cited:
- WO-A1-2006/060953
- KR-A- 20070 052 549

## Description

The invention relates to a heat pump system with an improved compressor cooling and a process for operating the heat pump system. In particular, the invention relates to a heat pump system, including a heat pump containing an evaporator as a heat source, a condenser as a heatsink, a compressor for driving and compressing a flow of a refrigerant, a throttle for expanding the refrigerant flow, and a refrigerant channel for circulating the refrigerant flow sequentially through the evaporator, the condenser, the throttle, and the compressor; an electric motor for driving the compressor; a heat pipe with a closed inner space containing a heat transfer medium, wherein the heat pipe has a first part that is in heat accepting contact with the compressor, a second part for heat transfer, and a third part containing a heat dispersing surface; and a process for operating this heat pump system.

Heat pumps are used in various fields of technology. A heat pump is a device which takes thermal energy from a reservoir with lower temperature, for example from the environment, and transfers it together with the drive energy as useful heat to a system to be heated with higher temperature. Heat pumps of this type can be used for example for heaters, dryers, washer-dryers, washing machines and dishwashers. A heat pump can also be used for cooling, e.g. in a refrigerator or in an air conditioner. The technical work is usually generated by means of electric energy. It is desired to reduce the consumption of electric energy and thus increase the energy efficiency of heat pumps. Another aim is to reduce the manufacturing costs of heat pumps. When heat pumps are used in dryers and washer-dryers, for example, drying times should also preferably be reduced.

The publication EP 2 202 347 A1 discloses a dryer with a drying chamber for an object i.e. cloth, to be dried, and a heat pump with an evaporator, a condenser and a programmable controller. A process air path arrangement obtains and maintains a preset minimum difference between an evaporator entry temperature and a dryer entry temperature and a preset lower threshold for the evaporator entry temperature. A connection point is provided between the condenser and an inlet air access for connecting a recirculating air duct to an inlet air duct.

In the operation of a heat pump, the compressor of the heat pump is usually heated up.

Cooling by a fan is then usually effected in order to allow a proper operation of the heat pump. In order to avoid a waste of energy, heat exchange means may be used to recover part of waste energy. However, in this case, the heat exchange means may be overheated due to a limitation of a capacity. Furthermore, a fan may be additionally installed to enhance heat exchange efficiency by supplying a large air volume. Especially, a compressor used in a heat pump serving as the heat exchange means may be overheated. In the case that the compressor is overheated, reliability of the dryer may be degraded, and compression efficiency of a refrigerant may be degraded. This may lower the entire heat exchange efficiency.

The publication WO 2010/003936 A1 discloses a heat pump type clothes dryer that comprises a tub wherein the laundry to be dried is emplaced, an air circulation duct wherein the drying cycle air is circulated, an evaporator disposed in the air circulation duct, cooling and reducing the humidity of the warm and humid air that comes from the tub and passes through it, a condenser heating the low-humid air coming through the evaporator, a compressor increasing the temperature and pressure of the refrigerant. The waste heat discharged from the compressor is utilized in order to heat the drying air in the air circulation duct.

The publication EP 2 550 390 B1 discloses a clothes dryer, comprising inter alia a heat pump having a first heat exchanger for heating air, a second heat exchanger for cooling air, a compressor and an expander connected between the first and second heat exchangers by pipes. In an embodiment the clothes dryer further comprises a heat transfer means installed between the compressor and air of a downstream side of the first heat exchanger, wherein the heat transfer means is implemented as a heat pipe including a first heat sink and a second heat sink at both ends thereof, the first heat sink contacting the surface of the compressor, wherein the heat pipe has a pipe shape of which two ends are sealed and has a heat transfer medium therein, the heat transfer medium receiving heat at a high temperature side connected to one end of the heat pipe and moves to another end of the heat pipe corresponding to a low temperature side.

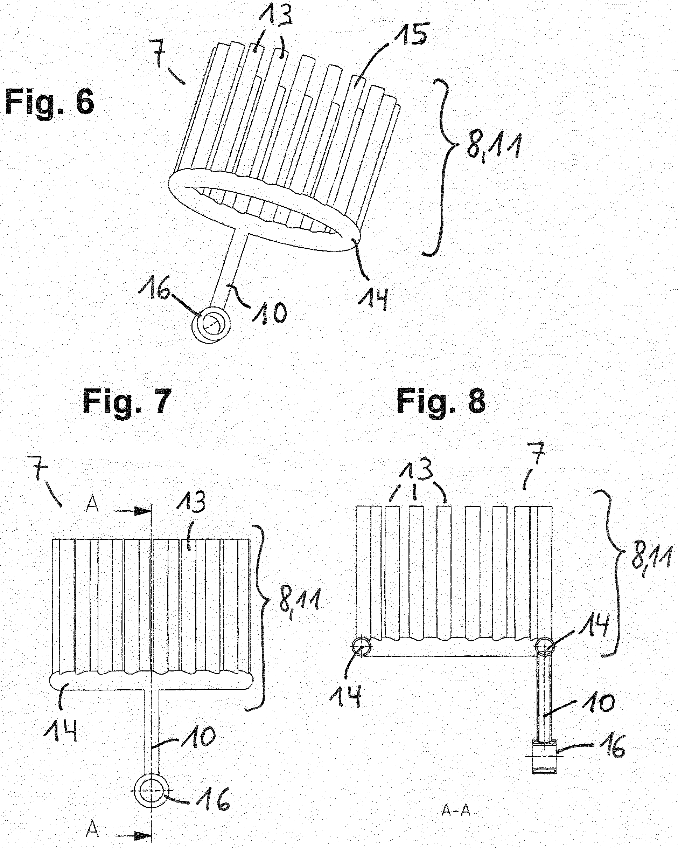

The publication WO 2006/060953 A1 represents the closest prior art and discloses a heat pump air conditioning unit with a low-pressure difference cycle which comprises a water seepage condenser (J2), an evaporator (J1) with inner volute tubes and a compressor (M) with inner heat pipes. Outer working fluid, i.e. water, seeps and cycles between the vent fins of the condenser (J2) and the surface of heat transfer tubes to form forcible heat exchange. The refrigerating cycle of the air-conditioning unit is a figure 8-form cycle, in which absorbent and coolant act as working fluid. It is disclosed that by ameliorating the structure of the condenser (J2), the evaporator (J1) and the compressor (M), it would be possible to further increase the refrigerating capacity and reduce the compressed work in the air conditioning unit and to improve at the same time the efficiency of the heat pump.

In view of this situation it is an object of the present invention to provide an improved heat pump that not only allows to better cool the compressor of the heat pump, but that also preferably allows to improve the input parameters of the refrigerant before the compression chamber and thus the compressor performance.

This object is achieved according to the present invention with a heat pump system and a process for operating the heat pump system according to the respective independent claims. Preferred embodiments of the heat pump system and the process are defined in respective dependent claims, with preferred embodiments of the process corresponding to preferred embodiments of the heat pump, and vice versa, even if not expressly specified elsewhere herein.

The invention is thus directed to a heat pump system, including a heat pump containing an evaporator as a heat source, a condenser as a heatsink, a compressor for driving and compressing a flow of a refrigerant, a throttle for expanding the refrigerant flow, and a refrigerant channel for circulating the refrigerant flow sequentially through the evaporator, the condenser, the throttle, and the compressor; an electric motor for driving the compressor; a heat pipe with a closed inner space containing a heat transfer medium, wherein the heat pipe has a first part that is in heat accepting contact with the compressor, a second part for heat transfer, and a third part containing a heat dispersing surface, wherein the first part of the heat pipe is provided as an essentially cylindrical enclosure around the electric motor, wherein the essentially cylindrical enclosure comprises one or more cylindrically shaped containers for the heat transfer medium of the heat pipe, wherein the second part of the heat pipe contains a ring-shaped tube which surrounds the electrical motor, and a connecting tube to the third part of the heat pipe, and wherein one cylindrical container with a hollow space between two cylindrically shaped walls is arranged around the electrical motor, the one cylindrical container being fluidly connected to the ring-shaped tube, the heat pump system including a control unit that is adapted to receive and analyze the heat transfer in the first part of the heat pipe, and to modify the input parameter of the refrigerant in order to improve the performance of the compressor.

Numerous refrigerants can be used in the heat pump, for example propane, which is also known by the designation R290 in the field of heat pump technology.

A heat pipe is a heat-transfer device that combines the principles of both thermal conductivity and phase transition to effectively transfer heat between two solid interfaces. At the hot interface of a heat pipe, a liquid in contact with a thermally conductive solid surface turns into a vapor by absorbing heat from that surface. The vapor then travels along the heat pipe to the cold interface and condenses back into a liquid, releasing the latent heat. The liquid then returns to the hot interface through either capillary action, centrifugal force, or gravity and the cycle repeats.

Dryers and washer dryers with heat pumps usually use a capillary or a regulated expansion valve as a throttle.

In the heat pump system, the second part of the heat pipe contains a ring-shaped tube which surrounds the electric motor, and a connecting tube to the third part of the heat pipe. It is preferred that the connecting tube protrudes from the ring-shaped tube and away from the electric motor and compressor.

The essentially cylindrical enclosure of the heat pump system comprises one cylindrically shaped container for the heat transfer medium of the heat pipe. In the present invention one cylindrical container with a hollow space between two cylindrically shaped walls is arranged around the electric motor, the one cylindrical container being fluidly connected to a ring-shaped tube.

According to a preferred embodiment of the heat pump system, a connecting tube of the second part of the heat pipe is arranged in parallel to a crank shaft of the compressor.

A heat pump system is furthermore preferred wherein the heat transfer medium in the heat pipe is one or more selected from the group consisting of the hydro fluorine carbonated (HFC) refrigerants R134a and R407C and the hydro carbonated (HC) refrigerants R22, R290, R600 and R600a. The heat transfer medium in heat conductive contact with the compressor in the first part of the heat pipe is usually vaporized and the resulting gas is transported in the closed inner space of the heat pipe through a connecting tube in the second part of the heat pipe to the third part where it exchanges the heat at a heat dispersing surface to condense and flow back to the first part of the heat pipe.

The invention is moreover directed to a process for operating a heat pump system including a heat pump containing an evaporator as a heat source, a condenser as a heatsink, a compressor for driving and compressing a flow of a refrigerant, a throttle for expanding the refrigerant flow, and a refrigerant channel for circulating the refrigerant flow sequentially through the evaporator, the condenser, the throttle, and the compressor; an electric motor for driving the compressor; a heat pipe with a closed inner space containing a heat transfer medium, with a first part that is in heat accepting contact with the compressor, a second part for heat transfer, and a third part containing a heat dispersing surface; wherein the first part of the heat pipe is provided as an essentially cylindrical enclosure around the electric motor, wherein the essentially cylindrical enclosure comprises one or more cylindrically shaped containers for the heat transfer medium of the heat pipe, wherein the second part of the heat pipe contains a ring-shaped tube which surrounds the electrical motor, and a connecting tube to the third part of the heat pipe, and wherein one cylindrical container with a hollow space between two cylindrically shaped walls is arranged around the electrical motor, the one cylindrical container being fluidly connected to the ring-shaped tube, the heat pump system including a control unit that is adapted to receive and analyze the heat transfer in the first part of the heat pipe, and to modify the input parameter of the refrigerant in order to improve the performance of the compressor, comprising the steps
(a) starting the compressor;
(b) measuring the heat transfer to the first part of the heat pipe;
(c) analyzing the heat transfer to the first part of the heat pipe; and
(d) modifying the input parameter of the compressor and/or the refrigerant in order to improve the performance of the compressor.

In the process, the heat pump system includes a control unit for the heat pump. Preferably, the control unit can be used to measure the heat transfer to the first part and to analyze it.

The transfer of energy takes place in general in the present invention from a high-temperature source to a low-temperature source by means of capillary forces. The energy transfer takes place in this regard continuously from the beginning of the process and is dependent on the amount of heat generated by the electric motor at a given moment in the process.

The invention may be used in a home appliance containing a heat pump. The home appliance is preferably embodied as a laundry dryer for pieces of laundry, and a washer-dryer which combines the function of washing laundry with the function of drying. Another embodiment is a dishwasher that performs drying of tableware by applying a heat pump circuit. In a laundry dryer or a washer-dryer the drying chamber is in general a rotatable drum.

The invention has several advantages. Waste heat of the compressor of the heat pump and especially the electric motor which drives it can be recovered. The heat generated by the electric motor used to cool the refrigerant entering the compression chamber can be also recovered. Moreover, in embodiments of the invention the analysis of the heat transfer from the heat pipe can be used to improve the operation of the compressor and thus of the entire heat pump. In addition, an overload of the heat pump can be avoided. As a result, power consumption may be reduced, and the reliability of the operation of the heat pump may be enhanced.

The thermodynamic parameters of the compressor itself can thus be improved. Namely, the inlet temperature of the refrigerant can be decreased and the refrigerant density will be increased. The volumetric flow through the compressor can be increased for the same power consumption. The volumetric flow through the compressor can be increased and thus the compressor cooling capacity. The heat loss will be used to improve the thermodynamic performance of the compressor. All this is possible without the need to install additional components to cool the compressor.

Further details of the invention will appear from the subsequent description of specific embodiments with references to the following Figures, wherein
- Figure 1: shows a vertical cut through a part of a heat pump system according to an embodiment of the present invention which contains the parts relevant for the present invention, namely a compressor of the heat pump and the heat pipe;
- Figure 2: shows a horizontal cut through a part of a heat pump system according to an embodiment of the present invention which contains the parts relevant for the present invention, namely a compressor of the heat pump and the heat pipe;
- Figure 3: shows a perspective view of an exemplary heat pipe as used in a first embodiment of the heat pump system of the present invention which contains the parts relevant for the present invention, namely the first part of the heat pipe and the connecting tube;
- Figure 4: shows a front view of the exemplary heat pipe of Figure 3;
- Figure 5: shows a cut view of the exemplary heat pipe of Figure 3, wherein the cut has been made along the line A-A shown in Figure 4;
- Figure 6: shows a perspective view of another heat pipe as used in an embodiment of a heat pump system which is not according to the present invention which contains the first part of this heat pipe and the connecting tube;
- Figure 7: shows a front view of the other, non-inventive heat pipe of Figure 6;
- Figure 8: shows a cut view of the other, non-inventive heat pipe of Figure 6, wherein the cut has been made along the line A-A shown in Figure 7.

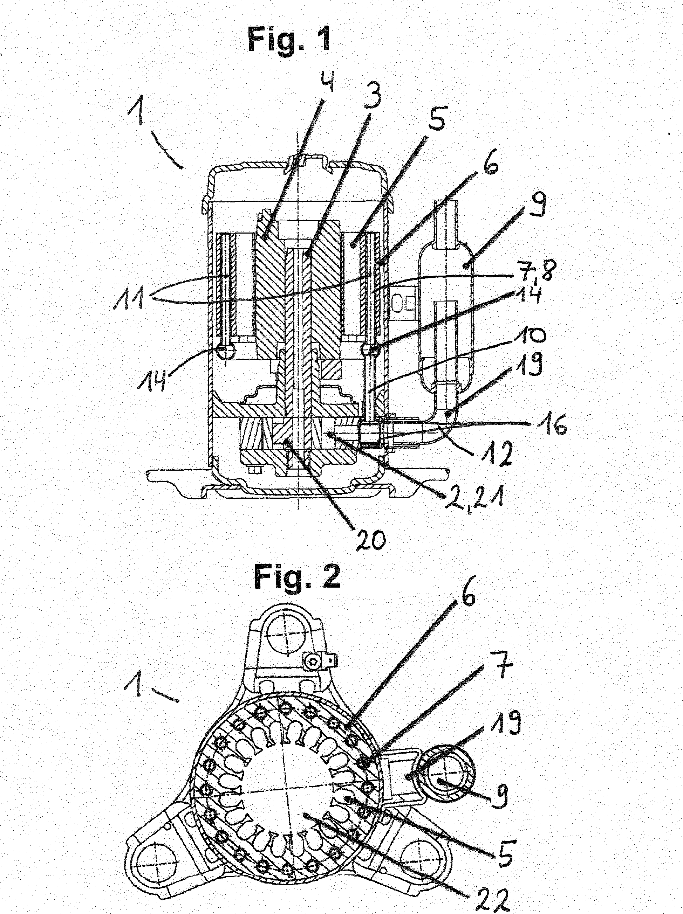

Figure 1 shows a vertical cut through a part of a heat pump system 1 according to an embodiment of the present invention which contains the parts relevant for the present invention, namely a compressor 2 of the heat pump and the heat pipe 7. 3 means a crank shaft of the compressor, 4 a rotor of the electric motor, 5 the motor winding, and 6 the stator of the electric motor. A heat pipe 7 which contains here in a first part 8 thereof one cylindrical container with, as cannot be seen here, a hollow space between two cylindrically shaped walls is arranged around the electrical motor 4,5,6, the one cylindrical container being fluidly connected to a ring-shaped tube 14. A connecting tube 10 and the ring-shaped tube 14 form a second part of the heat pipe 7 which is connected to a third part of the heat pipe 7 with a heat dispersing surface 16. 19 refers to a suction pipe of the heat pump. The third part contains the heat dispersing surface 16 where the gaseous heat transfer medium can condense. 11 refers to an essentially cylindrical enclosure, 20 to a roller and 21 to a compression chamber of the compressor. 9 refers to an accumulator which serves to separate the liquid phase of the incoming refrigerant from the evaporator.

Figure 2 shows a horizontal cut through a part of a heat pump system 1 according to an embodiment of the present invention which contains the parts relevant for the present invention, namely a compressor of the heat pump and the heat pipe 7. The reference signs have here the same meaning as for Figure 1. 22 refers to a rotor of the electric motor.

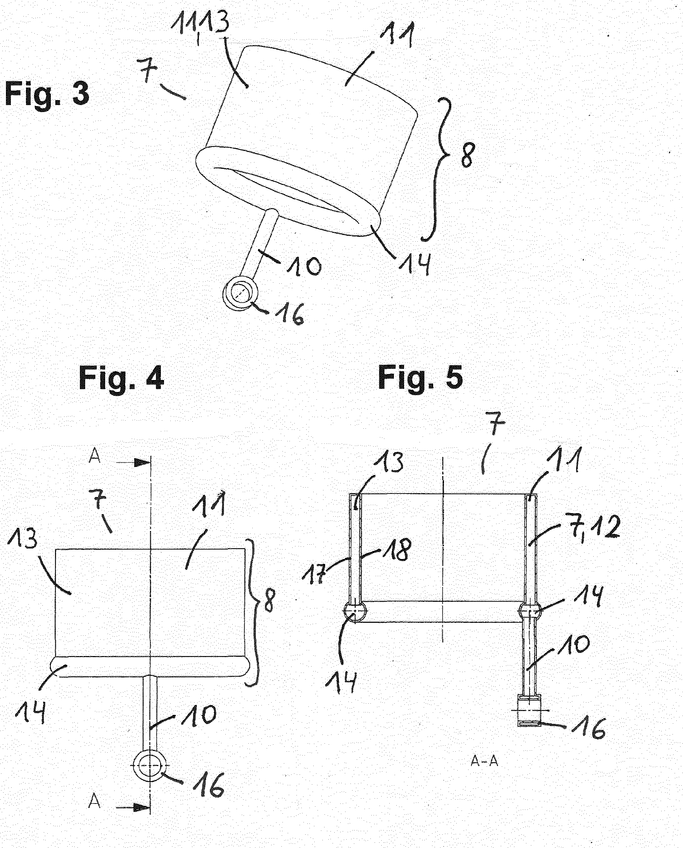

Figure 3 shows a perspective view of an exemplary heat pipe 7 as used in a first embodiment of the heat pump system of the present invention which contains the parts relevant for the present invention, namely the first part 8 of the heat pipe and the second part of the heat pipe containing a ring-shaped tube 14 and a connecting tube 10. The ring-shaped tube 14 is fluidly connected to the first part of the heat pipe which is here a cylindrically shaped container part 13 for a heat transfer medium which serves as an essentially cylindrical enclosure 11 for an electric motor respectively compressor not shown here. 16 refers to a heat dispersing surface of the third part of the heat pipe.

Figure 4 shows a front view of the exemplary heat pipe 7 of Figure 3 wherein the reference signs have the same meaning as for Figure 3.

Figure 5 shows a cut view of the exemplary heat pipe 7 of Figure 3, wherein the cut has been made along the line A-A shown in Figure 4, and wherein the reference signs have the same meaning as for Figure 3.

Figure 6 shows a perspective view of another heat pipe 7 as used in a heat pump system which is not according to the present invention which contains the parts relevant for the present invention, namely the first part 8 of this heat pipe and the second part of the heat pipe containing a ring-shaped tube 14 and a connecting tube 10. In this embodiment, 13 refers to a plurality of cylindrical containers that are arranged around an electric motor respectively compressor - not shown here - as an essentially cylindrical enclosure 11. The cylindrical containers 13 are fluidly connected to the ring-shaped tube 14. 16 refers to a heat dispersing surface of the third part of the heat pipe.

Figure 7 shows a front view of the heat pipe of Figure 6 wherein the reference signs have the same meaning as for Figure 6.

Figure 8 shows a cut view of the heat pipe 7 of Figure 6, wherein the cut has been made along the line A-A shown in Figure 7, and wherein the reference signs have the same meaning as for Figure 6.

### LIST OF REFERENCE NUMERALS

- 1: Heat pump system
- 2: Compressor
- 3: Crank shaft of compressor
- 4: Rotor of electric motor
- 5: Motor winding of electric motor
- 6: Stator of electric motor
- 7: Heat pipe
- 8: First part of heat pipe
- 9: Accumulator
- 10: Second part of the heat pipe; here: connecting tube
- 11: Essentially cylindrical enclosure
- 12: Closed inner space of heat pipe
- 13: Cylindrically shaped container part for heat transfer medium
- 14: Second part of the heat pipe; here: ring-shaped tube
- 15: Hollow space between two cylindrically shaped walls
- 16: Third part of the heat pipe with a heat dispersing surface
- 17: Outer wall of cylindrically shaped container
- 18: Inner wall of cylindrically shaped container
- 19: Suction pipe
- 20: Roller
- 21: Compression chamber of compressor
- 22: Rotor

## Claims

1. Heat pump system (1), including a heat pump containing an evaporator as a heat source, a condenser as a heatsink, a compressor (2) for driving and compressing a flow of a refrigerant, a throttle for expanding the refrigerant flow, and a refrigerant channel for circulating the refrigerant flow sequentially through the evaporator, the condenser, the throttle, and the compressor (2); an electrical motor (4,5,6) for driving the compressor (2); a heat pipe (7) with a closed inner space (12) containing a heat transfer medium, wherein the heat pipe (7) has a first part (8) that is in heat accepting contact with the compressor (2), a second part (10,14) for heat transfer, and a third part (16) containing a heat dispersing surface, wherein the first part (8) of the heat pipe (7) is provided as an essentially cylindrical enclosure (11) around the electrical motor (4,5,6), wherein the essentially cylindrical enclosure (11) comprises one or more cylindrically shaped containers (13) for the heat transfer medium of the heat pipe (7), **characterized in that** the second part of the heat pipe (7) contains a ring-shaped tube (14) which surrounds the electrical motor (4,5,6), and a connecting tube (10) to the third part (16) of the heat pipe (7), and wherein one cylindrical container (13) with a hollow space (15) between two cylindrically shaped walls (17,18) is arranged around the electrical motor (4,5,6), the one cylindrical container (13) being fluidly connected to the ring-shaped tube (14), the heat pump system (1) including a control unit that is adapted to receive and analyze the heat transfer in the first part (8) of the heat pipe (7), and to modify the input parameter of the refrigerant in order to improve the performance of the compressor (2).

2. Heat pump system (1) according to claim 1, wherein the connecting tube (10) protrudes from the ring-shaped tube (14) and away from the electric motor/compressor (4,5,6).

3. Heat pump system (1) according to any of claims 1 to 2, wherein a connecting tube (10) between the first part of the heat pipe (7) and the third part of the heat pipe (7) is arranged in parallel to a crank shaft (3) of the compressor (2).

4. Heat pump system (1) according to any of claims 1 to 3, wherein the heat transfer medium in the heat pipe (7) is one or more selected from the group consisting of the hydro fluorine carbonated (HFC) refrigerants R134a and R407C and the hydro carbonated (HC) refrigerants R22, R290, R600 and R600a.

5. Process for operating a heat pump system (1) including a heat pump containing an evaporator as a heat source, a condenser as a heatsink, a compressor (2) for driving and compressing a flow of a refrigerant, a throttle for expanding the refrigerant flow, and a refrigerant channel for circulating the refrigerant flow sequentially through the evaporator, the condenser, the throttle, and the compressor (2); an electrical motor (4,5,6) for driving the compressor (2); a heat pipe (7) with a closed inner space (12) containing a heat transfer medium, with a first part (8) that is in heat accepting contact with the compressor (2), a second part (10,14) for heat transfer, and a third part (16) containing a heat dispersing surface; wherein the first part (8) of the heat pipe (7) is provided as an essentially cylindrical enclosure (11) around the electrical motor (4,5,6), wherein the essentially cylindrical enclosure (11) comprises one or more cylindrically shaped containers (13) for the heat transfer medium of the heat pipe (7), wherein the second part of the heat pipe (7) contains a ring-shaped tube (14) which surrounds the electrical motor (4,5,6), and a connecting tube (10) to the third part (8) of the heat pipe (7), and wherein one cylindrical container (13) with a hollow space (15) between two cylindrically shaped walls (17,18) is arranged around the electrical motor (4,5,6), the one cylindrical container (13) being fluidly connected to the ring-shaped tube (14), the heat pump system (1) including a control unit that is adapted to receive and analyze the heat transfer in the first part (8) of the heat pipe (7), and to modify the input parameter of the refrigerant in order to improve the performance of the compressor (2), comprising the steps
(a) starting the compressor (2);
(b) measuring the heat transfer to the first part (8) of the heat pipe (7);
(c) analyzing the heat transfer to the first part (8) of the heat pipe (7); and
(d) modifying the input parameter of the compressor (2) and/or the refrigerant in order to improve the performance of the compressor (2).

## Patentansprüche

1. Wärmepumpensystem (1), das Folgendes aufweist: eine Wärmepumpe, die einen Verdampfer als Wärmequelle, einen Verflüssiger als Kühlkörper, einen Verdichter (2) zum Bewegen und Verdichten eines Kältemittelstroms, eine Drossel zum Expandieren des Kältemittelstroms und einen Kältemittelkanal zum Umwälzen des Kältemittelstroms nacheinander durch den Verdampfer, den Verflüssiger, die Drossel und den Verdichter (2) enthält, einen Elektromotor (4, 5, 6) zum Antreiben des Verdichters (2), ein Wärmerohr (7) mit einem geschlossenen Innenraum (12), der ein Wärmeübertragungsmedium enthält, wobei das Wärmerohr (7) einen ersten Teil (8), der sich in wärmeaufnehmendem Kontakt mit dem Verdichter (2) befindet, einen zweiten Teil (10, 14) für die Wärmeübertragung und einen dritten Teil (16) aufweist, der eine Wärmeableitfläche enthält, wobei der erste Teil (8) des Wärmerohrs (7) als im Wesentlichen zylindrische, um den Elektromotor (4, 5, 6) herum verlaufende Umhüllung (11) vorgesehen ist,
wobei die im Wesentlichen zylindrische Umhüllung (11) einen oder mehrere zylinderförmige Behälter (13) für das Wärmeübertragungsmedium des Wärmerohrs (7) umfasst,
**dadurch gekennzeichnet, dass** der zweite Teil des Wärmerohrs (7) eine ringförmige Röhre (14), die den Elektromotor (4, 5, 6) umgibt, und eine Verbindungsröhre (10) zum dritten Teil (16) des Wärmerohrs (7) enthält und wobei ein zylindrischer Behälter (13) mit einem Hohlraum (15) zwischen zwei zylinderförmigen Wänden (17, 18) um den Elektromotor (4, 5, 6) herum angeordnet ist, wobei der eine zylindrische Behälter (13) strömungstechnisch mit der ringförmigen Röhre (14) verbunden ist, wobei das Wärmepumpensystem (1) eine Steuereinheit aufweist, die so ausgelegt ist, dass sie die Wärmeübertragung im ersten Teil (8) des Wärmerohrs (7) empfängt und analysiert und den Eingabeparameter für das Kältemittel ändert, um die Leistung des Verdichters (2) zu verbessern.

2. Wärmepumpensystem (1) nach Anspruch 1, wobei die Verbindungsröhre (10) vom Elektromotor/Verdichter (4, 5, 6) weg von der ringförmigen Röhre (14) vorsteht.

3. Wärmepumpensystem (1) nach einem der Ansprüche 1 bis 2, wobei eine Verbindungsröhre (10) zwischen dem ersten Teil des Wärmerohrs (7) und dem dritten Teil des Wärmerohrs (7) parallel zu einer Kurbelwelle (3) des Verdichters (2) angeordnet ist.

4. Wärmepumpensystem (1) nach einem der Ansprüche 1 bis 3, wobei es sich bei dem Wärmeübertragungsmedium in dem Wärmerohr (7) um eines oder mehrere handelt, die aus der Gruppe ausgewählt sind, welche aus den Fluorkohlenwasserstoff-(FKW)-Kältemitteln R-134a und R-407C und den Kohlenwasserstoff-(KW)-Kältemitteln R-22, R-290, R-600 und R-600a besteht.

5. Verfahren zum Betreiben eines Wärmepumpensystems (1), das Folgendes aufweist:
eine Wärmepumpe, die einen Verdampfer als Wärmequelle, einen Verflüssiger als Kühlkörper, einen Verdichter (2) zum Bewegen und Verdichten eines Kältemittelstroms, eine Drossel zum Expandieren des Kältemittelstroms und einen Kältemittelkanal zum Umwälzen des Kältemittelstroms nacheinander durch den Verdampfer, den Verflüssiger, die Drossel und den Verdichter (2) enthält, einen Elektromotor (4, 5, 6) zum Antreiben des Verdichters (2), ein Wärmerohr (7) mit einem geschlossenen Innenraum (12), der ein Wärmeübertragungsmedium enthält, mit einem ersten Teil (8), der sich in wärmeaufnehmendem Kontakt mit dem Verdichter (2) befindet, einem zweiten Teil (10, 14) für die Wärmeübertragung und einem dritten Teil (16), der eine Wärmeableitfläche enthält, wobei der erste Teil (8) des Wärmerohrs (7) als im Wesentlichen zylindrische, um den Elektromotor (4, 5, 6) herum verlaufende Umhüllung (11) vorgesehen ist, wobei die im Wesentlichen zylindrische Umhüllung (11) einen oder mehrere zylinderförmige Behälter (13) für das Wärmeübertragungsmedium des Wärmerohrs (7) umfasst, wobei der zweite Teil des Wärmerohrs (7) eine ringförmige Röhre (14), die den Elektromotor (4, 5, 6) umgibt, und eine Verbindungsröhre (10) zum dritten Teil (8) des Wärmerohrs (7) enthält und ein zylindrischer Behälter (13) mit einem Hohlraum (15) zwischen zwei zylinderförmigen Wänden (17, 18) um den Elektromotor (4, 5, 6) herum angeordnet ist, wobei der eine zylindrische Behälter (13) strömungstechnisch mit der ringförmigen Röhre (14) verbunden ist, wobei das Wärmepumpensystem (1) eine Steuereinheit aufweist, die so ausgelegt ist, dass sie die Wärmeübertragung im ersten Teil (8) des Wärmerohrs (7) empfängt und analysiert und den Eingabeparameter für das Kältemittel ändert, um die Leistung des Verdichters (2) zu verbessern, mit folgenden Schritten:
(a) Starten des Verdichters (2),
(b) Messen der Wärmeübertragung zum ersten Teil (8) des Wärmerohrs (7),
(c) Analysieren der Wärmeübertragung zum ersten Teil (8) des Wärmerohrs (7) und
(d) Ändern des Eingabeparameters für den Verdichter (2) und/oder das Kältemittel, um die Leistung des Verdichters (2) zu verbessern.

## Revendications

1. Système de pompe à chaleur (1), incluant :
une pompe à chaleur contenant un évaporateur à titre de source de chaleur, un condenseur servant de dissipateur thermique, un compresseur (2) pour entraîner et comprimer un flux d'un réfrigérant, un dispositif d'étranglement pour détendre le flux de réfrigérant, et un canal de réfrigérant pour une circulation du flux de réfrigérant consécutivement à travers l'évaporateur, le condenseur, le dispositif d'étranglement et le compresseur (2),
un moteur électrique (4, 5, 6) pour entraîner le compresseur (2),
un tuyau caloporteur (7) comprenant un espace intérieur fermé (12) contenant un fluide de transfert thermique, dans lequel le tuyau caloporteur (7) comprend une première partie (8) qui est en contact de réception de chaleur avec le compresseur (2), une deuxième partie (10, 14) pour un transfert de chaleur, et une troisième partie (16) contenant une surface de dispersion de chaleur, dans lequel la première partie (8) du tuyau caloporteur (7) est configurée sous forme d'une enceinte essentiellement cylindrique (11) autour du moteur électrique (4, 5, 6),
dans lequel l'enceinte essentiellement cylindrique (11) comprend un ou plusieurs contenants de forme cylindrique (13) pour le fluide de transfert thermique du tuyau caloporteur (7),
**caractérisé en ce que**
la deuxième partie du tuyau caloporteur (7) contient un tube de forme annulaire (14) qui entoure le moteur électrique (4, 5, 6), et un tube de raccordement (10) à la troisième partie (16) du tuyau caloporteur (7), et
dans lequel un contenant cylindrique (13) comportant un espace creux (15) entre deux parois de forme cylindrique (17, 18) est agencé autour du moteur électrique (4, 5, 6), le contenant cylindrique (13) étant connecté fluidiquement au tube de forme annulaire (14), le système de pompe à chaleur (1) incluant une unité de commande qui est adaptée pour recevoir et analyser le transfert de chaleur dans la première partie (8) du tuyau caloporteur (7), et pour modifier le paramètre d'entrée du réfrigérant afin d'améliorer le rendement du compresseur (2).

2. Système de pompe à chaleur (1) selon la revendication 1, dans lequel le tube de raccordement (10) fait saillie à partir du tube annulaire (14) et en s'éloignant du moteur électrique/compresseur (4, 5, 6).

3. Système de pompe à chaleur (1) selon l'une quelconque des revendications 1 à 2, dans lequel un tube de raccordement (10) entre la première partie du tuyau caloporteur (7) et la troisième partie du tuyau caloporteur (7) est disposé en parallèle à un vilebrequin (3) du compresseur (2).

4. Système de pompe à chaleur (1) selon l'une des revendications 1 à 3, dans lequel le fluide de transfert de chaleur dans le tuyau caloporteur (7) est un ou plusieurs fluides sélectionnés parmi le groupe constituant en réfrigérants hydrofluorocarbures (HFC) R134a et R407c et les réfrigérants hydrocarbures (HC) R22, R290, R600 et R600a.

5. Procédé de fonctionnement d'un système de pompe à chaleur (1) incluant :
une pompe à chaleur contenant un évaporateur à titre de source de chaleur, un condenseur en tant que dissipateur thermique, un compresseur (2) pour entraîner et comprimer un flux d'un réfrigérant, un dispositif d'étranglement pour détendre le flux de réfrigérant, et un canal de réfrigérant pour une circulation du flux de réfrigérant consécutivement à travers l'évaporateur, le condenseur, le dispositif d'étranglement et le compresseur (2), un moteur électrique (4, 5, 6) pour entraîner le compresseur (2), un tuyau caloporteur (7) comprenant un espace intérieur fermé (12) contenant un fluide de transfert thermique, comprenant une première partie (8) qui est en contact de réception de chaleur avec le compresseur (2), une deuxième partie (10, 14) pour un transfert de chaleur, et une troisième partie (16) contenant une surface de dispersion de chaleur, dans lequel la première partie (8) du tuyau caloporteur (7) est configurée sous forme d'une enceinte essentiellement cylindrique (11) autour du moteur électrique (4, 5, 6), dans lequel l'enceinte essentiellement cylindrique (11) comprend un ou plusieurs contenants de forme cylindrique (13) pour le fluide de transfert thermique du tuyau caloporteur (7),dans lequel la deuxième partie du tuyau caloporteur (7) contient un tube de forme annulaire (14) qui entoure le moteur électrique (4, 5, 6), et un tube de raccordement (10) à la troisième partie (8) du tuyau caloporteur (7), et dans lequel un contenant cylindrique (13) comportant un espace creux (15) entre deux parois de forme cylindrique (17, 18) est agencé autour du moteur électrique (4, 5, 6), le contenant cylindrique (13) étant connecté fluidiquement au tube de forme annulaire (14), le système de pompe à chaleur (1) incluant une unité de commande qui est adaptée pour recevoir et analyser le transfert de chaleur dans la première partie (8) du tuyau caloporteur (7), et pour modifier le paramètre d'entrée du réfrigérant afin d'améliorer le rendement du compresseur (2), le procédé comprenant les étapes suivantes :
a) démarrage du compresseur (2),
b) mesure du transfert de chaleur à la première partie (8) du tuyau caloporteur (7),
c) analyse du transfert de chaleur à la première partie (8) du tuyau caloporteur (7), et
d) modification du paramètre d'entrée du compresseur (2) et/ou du réfrigérant afin d'améliorer le rendement du compresseur (2).
